# EUROPÄISCHE PATENTSCHRIFT

(11) **EP 1 336 639 B1**
(45) Veröffentlichungstag und Bekanntmachung des Hinweises auf die Patenterteilung: **28.04.2004**
(21) Anmeldenummer: 02003667.9
(22) Anmeldetag: 18.02.2002
(51) Int. Cl.: C08K 5/19, C07C 211/63

(54) **Quartäre Alkylammoniumverbindungen als Antistatika für Kunststoffe**
Quaternary alkylammonium compounds as antistatic agents for polymers
Composés d'alkylammonium quaternaire et leur utilisation comme antistatiques pour polymères

(43) Veröffentlichungstag der Anmeldung: 20.08.2003
(73) Patentinhaber: Dr. Th. Böhme KG Chem. Fabrik GmbH & Co., 82538 Geretsried (DE)
(72) Erfinder: Schönmann, Gertrud, Dr., 82166 Gräfelfing (DE); Ostermann, Jürgen, 82515 Wolfratshausen (DE)
(74) Vertreter: Störle, Christian, Dr.

(56) Entgegenhaltungen:
- US-A- 3 933 697
- US-A- 4 257 769
- US-A- 5 171 641
- PATENT ABSTRACTS OF JAPAN vol. 1999, no. 13, 30. November 1999 (1999-11-30) -& JP 11 209633 A (BRIDGESTONE CORP), 3. August 1999 (1999-08-03)

## Beschreibung

Die Erfindung bezieht sich auf quartäre Ammoniumverbindungen, die als Antistatika für Zwei-Komponenten-Kunststoffsysteme verwendet werden, sowie auf ein Verfahren zur Herstellung solcher Verbindungen.

Aufgrund Ihrer Fähigkeit als Isolatoren zu wirken, haben Kunststoffe häufig die nachteilige Eigenschaft, Staub und Schmutzteilchen durch elektrostatische Aufladung anzuziehen und festzuhalten. Kunststoffartikel werden deshalb oftmals vor der Formgebung Antistatika beigemischt oder nachträglich die Oberfläche mit Antistatika, z. B. in Sprayform, behandelt. Bei Antistatika handelt es sich um Präparate zur Verhinderung der u. a. durch Reibung entstehenden elektrostatischen Aufladung bei Kunststoffen.

Antistatika, die der Polymermasse vor oder während der Verarbeitung zum Kunststoffartikel beigefügt werden, werden als innere Antistatika bezeichnet.

Aus der DE 198 29 788 A1 sind Esterquats bekannt, die als Antistatika für thermoplastische Kunststoffe, insbesondere Polyvinylchlorid, eingesetzt werden. Allerdings stellt diese Offenlegungsschrift ausschließlich auf thermoplastische Kunststoffe ab. Aus ihr gehen keine Hinweise hervor, daß Esterquats als innere Antistatika für Zwei-Komponenten-Kunststoffsysteme, die in der Regel keine Thermoplaste sondern Duroplaste sind, überhaupt geeignet sind.

Bei Zwei-Komponenten-Kunststoffsystemen handelt es sich um Systeme, bei denen in einer Vemetzungsreaktion aus zwei Komponenten eine Polymermatrix gebildet wird. Beispiele für Zwei-Komponenten-Kunststoffsysteme sind Zwei-Komponenten-Polyurethane und Epoxidharzsysteme. Bei den Zwei-Komponenten-Polyurethansystemen liegen als erste Komponenten ein Di- oder Polyol vor, das mit einem Di- oder Polyisocyanat umgesetzt wird, wobei durch Vernetzung der Komponenten eine Polyurethan-Polymermatrix gebildet wird.

Auch bei solchen Zwei-Komponenten-Kunststoffsystemen wäre es günstig, innere Antistatika zur Verfügung zu haben.

Der vorliegenden Erfindung liegt somit die Aufgabe zugrunde, eine Verbindung bereitzustellen, die als inneres Antistatikum für Zwei-Komponenten-Kunststoffsysteme eingesetzt werden kann.

Erfindungsgemäß wird dies durch eine Verbindung der Formel (1) erreicht 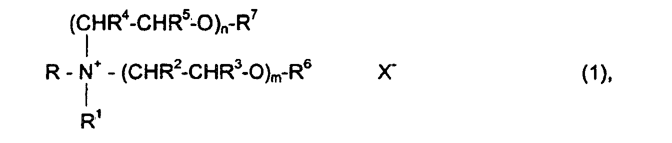 in der
R für geradkettigen oder verzweigten C₈-C₂₂ Alkyl-Rest, insbesondere mit einer geraden Anzahl an C-Atome;
R¹ für C₁-C₄-Alkyl- oder Benzyl-Rest;
R², R³, R⁴ und R⁵ unabhängig voneinander für Wasserstoff oder C₁-C₄-Alkyl-Rest, insbesondere Methyl;
R⁶ und R⁷ unabhängig voneinander für C₁-C₄-Acyl- oder C₁-C₄-Alkyl-Rest;
X⁻ für Halogenid oder C₁-C₄-Alkyl-Sulfat, und
m und n unabhängig voneinander für 1 bis 50 stehen.

Es wurde überraschenderweise gefunden, daß die erfindungsgemäßen Verbindungen, insbesondere in den nachstehend näher beschriebenen bevorzugten Ausführungsformen, besonders gut als innere Antistatika für Zwei-Komponenten-Kunststoffsysteme, insbesondere zwei Komponenten-Polyurethansysteme, geeignet sind. Die erfindungsgemäßen Verbindungen lösen sich in der Polyolkomponente und können deshalb sehr leicht dosiert werden. Die erfindungsgemäßen Verbindungen besitzen keine reaktiven Gruppen, die mit funktionellen Gruppen der Komponenten der Zwei-Komponenten-Kunststoffsysteme, beispielsweise mit den OH-Gruppen der Polyolkomponente und/oder mit Isocyanaten, reagieren. Demzufolge werden die erfindungsgemäßen Verbindungen nicht kovalent an die Polymerketten gebunden. Sie können sich deshalb innerhalb der Polymermatrix bewegen, wodurch die antistatische Wirksamkeit voll erhalten bleibt. Die Verarbeitung des Zwei-Komponenten-Kunststoffsystems zu den Kunststoffartikeln kann nach Zugabe des Antistatikums in üblicher Weise erfolgen.

Wie bereits vorstehend ausgeführt wurde, handelt es sich bei R um einen geradkettigen oder verzweigten C₈-C₂₂-Alkyl-Rest. Zur Herstellung der erfindungsgemäßen Verbindung kann von einem primären Amin der Formel C₈-C₂₂-Alkyl-NH₂ ausgegangen werden, wodurch R in die erfindungsgemäße Verbindung eingebaut wird. Dabei können entweder solche Amine eingesetzt werden, die überwiegend, beispielsweise zu mehr als 90%, ein bestimmtes Amin aufweisen. Es können aber auch Gemische von Aminen eingesetzt werden, die Anteile der vorstehenden C₈-C₂₂-Alkyl-Amine aufweisen.

In einer besonders bevorzugten Ausführungsform der erfindungsgemäßen Verbindung wird zu dessen Herstellung Kokosfettamin, eingesetzt, d. h. R steht für Kokosalkyl. Kokosfettamin weist ungefähr folgende mittlere Kettenverteilung (in %) auf: 6% C₈, 6% C₁₀, 52% C₁₂, 18% C₁₄, 9% C₁₆ und 8% C₁₈. Wird ein Gemisch an Alkylaminen, wie Kokosfettamin, eingesetzt, wird ein entsprechendes Gemisch der erfindungsgemäßen Verbindungen erhalten, wenn keine weitere Trennung und Reinigung einer einzelnen erfindungsgemäßen Verbindung aus diesem Gemisch erfolgt. Der Einsatz von Kokosfettaminen ist günstig, da es leicht zur Verfügung steht und zu erfindungsgemäßen Verbindungen mit besonders guten antistatischen Eigenschaften führt.

In der erfindungsgemäßen Verbindung liegt als Rest R¹ ein C₁-C₄-Alkyl- oder Benzyl-Rest vor. In einer bevorzugten Ausführungsform der erfindungsgemäßen Verbindung handelt es sich bei R¹ um eine Methyl-Rest. Ein solcher Alkyl-Rest, insbesondere Methyl-Rest, kann in besonders einfacher Weise in die erfindungsgemäße Verbindung eingefügt werden, in dem das N-Atom durch eine übliche Alkylierungs-Reaktion quartärniert wird. Insbesondere als Methylierungsmittel können für solche Reaktionen beispielsweise Dimethylsulfat, Methyljodid oder Methylbromid eingesetzt werden, wodurch in besonders einfacher Weise die MethylGruppe in die erfindungsgemäße Verbindung eingebaut werden kann.

Die Polyalkylenglykol-Ketten (CHR²-CHR³-O)ₘ und (CHR⁴-CHR⁵-O)ₙ können in die erfindungsgemäße Alkylammoniumverbindung eingebaut werden, indem das vorgenannte primäre Alkylamin mit einem entsprechenden Oxiran, insbesondere Ethylenoxid, Propylenoxid oder einem Gemisch davon, umgesetzt wird. Demzufolge können die vorgenannten Polyalkylenglykol-Ketten von Ethylenoxid, Propylenoxid oder einem Gemisch davon abgeleitet sein. Wird ein Gemisch von Ethylenoxid und Propylenoxid eingesetzt, hat dies zur Folge, daß die einzelnen Kettenglieder nicht identisch sein müssen, sondern abhängig vom Verhältnis von Ethylenoxid und Propylenoxid im eingesetzten Gemisch statistisch verteilt sind. Vorgenannte Polyalkylenglykol-Ketten sind günstig, da die erfindungsgemäßen Verbindungen dadurch besonders gute antistatische Eigenschaften erhalten.

Wie vorstehend ausgeführt wurde, sind m und n unabhängig voneinander und stehen für eine Zahl von 1 bis 50. Es wird dabei ausdrücklich darauf hingewiesen, daß die Zahl 1 bis 50 auch eine gebrochene rationale Zahl, wie beispielsweise 3,5 oder 4,5, sein kann. Eine Kettenlänge von z. B. 3,5, d. h. wenn m = n = 3,5, wird erhalten, wenn 7 mol Ethylenoxid und/oder Propylenoxid pro 1 mol primäres Alkylamin eingesetzt werden. Die durchschnittliche Länge der Polyalkylenglykol-Kette beträgt dann 3,5. Dieser Wert für m und n ist günstig, da dadurch eine gute Beweglichkeit der erfindungsgemäßen Verbindungen in der Polymermatrix und somit eine gute Wirkung als Antistatikum erreicht wird.

In der erfindungsgemäßen quartären Alkylammoniumverbindung liegen die Substituenten R⁶ und R⁷ vor. Diese Substituenten sind an die ansonsten freie OH-Gruppen der Polyalkylenglykol-Ketten gebunden. Dadurch wird erreicht, daß die OH-Gruppen nicht mit den Isocyanaten, die als Kunststoffkomponente in zwei Komponenten-Polyurethanen vorliegen, reagieren können. Es wird somit vermieden, daß die erfindungsgemäße Verbindung in die Polymer-Kette eingebaut wird. Sie bleibt vielmehr in der Polymermatrix beweglich und kann dadurch ihre antistatische Wirkung besonders gut entfalten.

In einer bevorzugten Ausführungsform stehen R⁶ und R⁷ unabhängig voneinander für C(O)-CH₃. Die Einführung der Acetylgruppe ist günstig, da sie an die freien OH-Gruppen der Polyalkylenglykol-Ketten in besonders einfacher Weise gebunden werden kann, beispielsweise durch Umsetzen mit einer aktivierten Säure, wie Essigsäureanhydrid, wobei freiwerdende Essigsäure in einfacher Weise nahezu vollständig von der erfindungsgemäßen Verbindung abdestilliert werden kann.

Bei der erfindungsgemäßen Verbindung handelt es sich um eine quartäre Alkylammonium-Verbindung. Zum Ladungsausgleich ist es deshalb notwendig, daß ein zur positiven Ladung am N-Atom entsprechende Gegenladung vorliegt. Diese wird durch das Anion X⁻ in die erfindungsgemäße Erfindung eingebracht. Als besonders günstig hat sich dabei MeSO₄⁻ erwiesen. Dieses Anion entsteht aus Dimethylsulfat, das zur Alkylierung und somit zur Einfügung der Methylgruppe als Substituent R¹ in die erfindungsgemäße Verbindung eingesetzt werden kann.

Des weiteren ist Gegenstand der vorliegenden Erfindung ein Verfahren zur Herstellung der vorstehend beschriebenen quartären Alkylammoniumverbindung, bei dem an ein Amin R-NH₂ zwei Polyalkylenglykol-Ketten (CHR²-CHR³-O)ₘH und (CHR⁴-CHR⁵-O)ₙH und an die OH-Gruppen dieser Polyalkylenglykol-Ketten die Reste R⁶ und R⁷ und dann der Rest R¹ eingeführt wird. Dabei sind die Reste R, R¹, R², R³, R⁴, R⁵, R⁶ und R⁷ wie vorstehend definiert.

Zur Herstellung der erfindungsgemäßen Verbindungen nach dem erfindungsgemäßen Verfahren wird von den vorstehend beschriebenen primären Aminen bzw. Gemischen von primären Aminen R-NH₂ ausgegangen, wie beispielsweise das oben erwähnte Amin-Gemisch Kokosfettamin. Als nächster Schritt werden dann zwei der vorstehend näher beschriebenen Polyalkylenglykol-Ketten an das primäre Amin gebunden. Dies kann beispielsweise durch Umsetzen des primären Amins oder Gemisches mit Ethylenoxid oder Propylenoxid oder einem Gemisch davon erfolgen. Dabei wird in Abhängigkeit der gewünschten Kettenlänge m und n die Menge an Ethylenoxid, Propylenoxid bzw. Gemisch davon gewählt. Zum Verschluß der freien OH-Gruppen der Polyalkylenglykol-Ketten werden davon die Reste R⁶ und R⁷ eingefügt. Dabei handelt es sich gemäß vorstehenden Ausführungen beispielsweise um Acylreste und Alkylreste. Alkylreste können durch Alkylierung eingefügt werden, wobei die Menge des Alkylierungsmittels bereits so gewählt werden kann, daß auch das Stickstoffatom zu einem quartäre Stickstoff-Atom umgewandelt wird, wodurch dann auch gleichzeitig der Rest R¹ in die erfindungsgemäße Verbindung eingefügt werden kann. Soll der Rest R⁶ bzw. R⁷ ein Acylrest sein, kann beispielsweise eine Umsetzung mit der entsprechenden Carbonsäure bzw. einer aktivierten Carbonsäure, wie einem Säureanhydrid oder einem Säurechlorid, erfolgen. Als besonders günstig hat sich dabei als Säureanhydrid das Essigsäureanhydrid erwiesen, da als Nebenprodukt der Acylierungsreaktion Essigsäure entsteht, die in einfacher Weise nahezu quantitativ abdestilliert werden kann. Die Umsetzung mit Essigsäure kann bei etwa 160°C während etwa 1 Stunde oder bei 80-100°C während etwa 3 Stunden erfolgen.

Als nächster Schritt kann dann der Rest R¹ am N-Atom eingefügt werden. Dadurch wird das tertiäre Amin in eine quartäre Ammoniumverbindung umgewandelt. Die Einfügung des Restes R¹ kann durch eine übliche Alkylierungsreaktion erfolgen. Soll R¹ eine Methylgruppe sein, kann die Alkylierung beispielsweise durch Methyljodid, Methylbromid oder Dimethylsulfat erfolgen.

Die einzelnen Reaktionsschritte des vorgenannten erfindungsgemäßen Verfahrens sind in der organischen synthetischen Chemie an sich bekannt. Der Fachmann kennt somit hierzu notwendige Materialien und Reaktionsbedingungen. Die Aufarbeitung der nach vorstehendem Syntheseverfahren erhaltenen quartären Ammoniumverbindung kann in üblicher Weise, beispielsweise durch chromatographische Verfahren, erfolgen, falls eine Reinigung gewünscht wird.

Die erfindungsgemäßen quartären Ammoniumverbindungen eignen sich aufgrund ihrer Eigenschaften bestens zur Verwendung als innere Antistatika für Zwei-Komponenten-Kunststoffsysteme, wie sie vorstehend beschrieben wurden, insbesondere Epoxidharzsysteme und Zwei-Komponenten-Polyurethane. Solche Zwei-Komponenten-Polyurethane weisen als Alkoholkomponente ein Di- oder Polyol sowie weiterhin ein Di- oder Polyisocyanat auf. Diese Komponenten werden zu einer Polymermatrix vemetzt. Solche Zwei-Komponenten-Polyurethane finden in Beschichtungen, Schäumen und Fußböden Verwendung. Die erfindungsgemäße Verbindung kann vor der Vernetzung einer der Komponenten der Zwei-Komponenten-Kunststoffe zugegeben werden.

Zur Erniedrigung des Schmelzbereichs der erfindungsgemäßen Verbindungen können diesen Verbindungen zugesetzt werden, die den Schmelzpunkt der erfindungsgemäßen Verbindungen erniedrigen, wie beispielsweise Buthyrolacton. Für die technische Anwendung kann ein Gemisch von 75 Gew.% der erfindungsgemäßen Verbindung und 25 Gew.% Buthyrolacton eingesetzt werden, so daß der Aktivgehalt dieses Gemisches 75 % beträgt.

Die Anwendungsmenge der erfindungsgemäßen Erfindung kann 0,5 bis 3,0 Gew.%, bezogen auf das Gesamtgewicht des Kunststoffs (bei lösemittelhaltigen Systemen bezogen auf den Feststoffanteil), betragen.

Die vorliegende Erfindung wird anhand des nachfolgenden Beispiels näher erläutert, ohne sie aber darauf einzuschränken.

### Beispiel 1: Herstellung einer erfindungsgemäßen Verbindung

In einem ersten Schritt wurde in üblicher Weise Kokosfettamin mit der Zusammensetzung 6% C₈, 6% C₁₀, 52% C₁₂, 18% C₁₄, 9% C₁₆, 8% C₁₈ mit einem siebenfachen molaren Überschuß Propylenoxid umgesetzt. Von diesem Produkt wurden 71,60 kg mit 36,22 kg Essigsäureanhydrid unter Stickstoff bei 85 bis 95 °C während drei Stunden unter Rühren umgesetzt. Anschließend wurde die entstandene Essigsäure im Vakuum abdestilliert (Cₘₐₓ=100°C). Nachfolgend wurden 15,69 g Dimethylsulfat zu den gewonnenen Destillationsprodukt bei 75-80°C während 1,5 Stunden zugegeben und bei dieser Temperatur während drei Stunden gerührt. Es wurde eine erfindungsgemäße Verbindung erhalten.

## Patentansprüche

1. Quartäre Alkylammoniumverbindung der Formel (1) 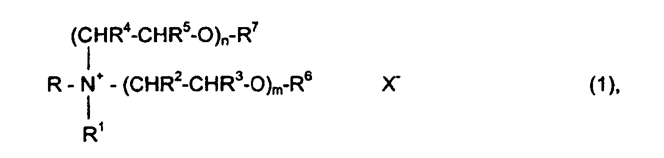 in der
R für geradkettigen oder verzweigten C₈-C₂₂ Alkyl-Rest;
R¹ für C₁-C₄-Alkyl- oder Benzyl-Rest;
R², R³, R⁴ und R⁵ unabhängig voneinander für Wasserstoff oder C₁-C₄-Alkyl-Rest;
R⁶ und R⁷ unabhängig voneinander für C₁-C₄-Acyl- oder C₁-C₄-Alkyl-Rest;
X⁻ für Halogenid oder C₁-C₄-Alkyl-Sulfat, und
m und n unabhängig voneinander für 1 bis 50 stehen.

2. Alkylammoniumverbindungen nach Anspruch 1, wobei R für Kokosalkyl steht.

3. Alkylammoniumverbindung nach einem der vorhergehenden Ansprüche, wobei R¹ Methyl bedeutet.

4. Alkylammoniumverbindung nach einem der vorhergehenden Ansprüche, wobei (CHR²-CHR³-O)ₘ und/oder (CHR⁴-CHR⁵-O)ₙ von Ethylenoxid, Propylenoxid oder einem Gemisch davon abgeleitet ist.

5. Alkylammoniumverbindung nach einem der vorhergehenden Ansprüche, wobei m = n = 3,5.

6. Alkylammoniumverbindung nach einem der vorhergehenden Ansprüche, wobei R⁶ und R⁷ für C(O)-CH₃ stehen.

7. Alkylammoniumverbindung nach einem der vorhergehenden Ansprüche, wobei X⁻ für MeSO₄⁻ steht.

8. Verfahren zur Herstellung einer Alkylammoniumverbindung nach einem der Ansprüche 1 bis 7, bei dem an ein Amin R-NH₂ zwei Polyalkylenglykol-Ketten (CHR²-CHR³-O)ₘH und (CHR⁴-CHR⁵-O)ₙH, an die OH-Gruppen dieser Polyalkylenglykol-Ketten die Reste R⁶ und R⁷ und der Rest R¹ angefügt wird.

9. Verwendung einer Alkylammoniumverbindung nach einem der Ansprüche 1 bis 7 als inneres Antistatikum für Zwei-Komponenten-Kunststoffe.

## Claims

1. Quaternary alkylammonium compound of formula (1): 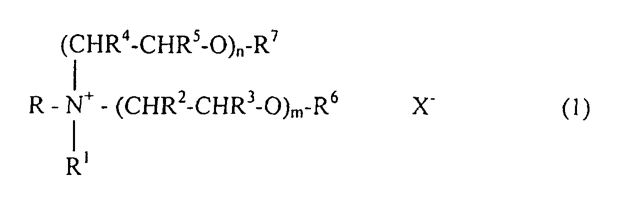 in which
R is a linear or branched C₈-C₂₂-alkyl radical;
R¹ is a C₁-C₄-alkyl or benzyl radical;
R², R³, R⁴ and R⁵ independently of one another are hydrogen or a C₁-C₄-alkyl radical;
R⁶ and R⁷ independently of one another are a C₁-C₄-acyl or C₁-C₄-alkyl radical;
X⁻ is halide or C₁-C₄-alkylsulfate; and
m and n independently of one another are I to 50.

2. Alkylammonium compounds according to Claim 1 in which R is coconut alkyl.

3. Alkylammonium compound according to one of the preceding claims in which R¹ is methyl.

4. Alkylammonium compound according to one of the preceding claims in which (CHR²-CHR³-O)ₘ and/or (CHR⁴-CHR⁵-O)ₙ are derived from ethylene oxide, propylene oxide or a mixture thereof.

5. Alkylammonium compound according to one of the preceding claims in which m = n = 3.5.

6. Alkylammonium compound according to one of the preceding claims in which R⁶ and R⁷ are C(O)-CH₃.

7. Alkylammonium compound according to one of the preceding claims in which X⁻ is MeSO₄⁻.

8. Process for the preparation of an alkylammonium compound according to one of Claims 1 to 7, wherein two polyalkylene glycol chains (CHR²-CHR³-O)ₘH and (CHR⁴-CHR⁵-O)ₙH are attached to an amine R-NH₂, the radicals R⁶ and R⁷ are attached to the OH groups of these polyalkylene glycol chains, and the radical R¹ is attached.

9. Use of an alkylammonium compound according to one of Claims 1 to 7 as an internal antistatic agent for two-component plastics.

## Revendications

1. Composé quaternaire d'alkyl-ammonium répondant à la formule générale (1) : 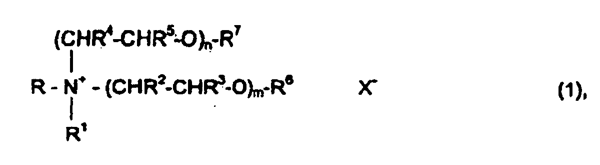 dans laquelle
R représente un radical alkyle en C₈-C₂₂ linéaire ou ramifié ;
R¹ représente un radical alkyle en C₁-C₄ ou benzyle;
R², R³, R⁴ et R⁵ représentent, indépendamment l'un de l'autre, un hydrogène ou un radical alkyle en C₁-C₄ ;
R⁶ et R⁷ représentent, indépendamment l'un de l'autre, un radical acyle en C₁-C₄ ou alkyle en C₁-C₄ ;
X représente un halogénure ou un sulfate d'alkyle en C₁-C₄ ; et
m et n représentent 1 à 50 indépendamment l'un de l'autre.

2. Composés d'alkyl-ammonium selon la revendication 1, dans lesquels
R est un mélange coco-alkyle.

3. Composé d'alkyl-ammonium selon l'une des revendications précédentes, dans lequel
R¹ représente un groupe méthyle.

4. Composé d'alkyl-ammonium selon l'une des revendications précédentes, dans lequel
(CHR²-CHR³-O)ₘ et/ou (CHR⁴-CHR⁵-O)ₙ sont dérivés de l'oxyde d'éthylène, l'oxyde de propylène ou d'un mélange de ceux-ci.

5. Composé d'alkyl-ammonium selon l'une des revendications précédentes, dans lequel
m = n = 3,5.

6. Composé d'alkyl-ammonium selon l'une des revendications précédentes, dans lequel
R⁶ et R⁷ représentent C(O)-CH₃.

7. Composé d'alkyl-ammonium selon l'une des revendications précédentes, dans lequel
X représente MeSO₄-.

8. Procédé de préparation d'un composé d'alkyl-ammonium selon l'une des revendications 1 à 7, dans lequel deux chaînes polyalkylène glycol (CHR²-CHR³-O)ₘH et (CHR⁴-CHR⁵-O)ₙH sont ajoutées à une amine R-NH₂ et les radicaux R⁶ et R⁷ puis le radical R¹ aux groupes OH de ces chaînes polyalkylène glycol.

9. Utilisation d'un composé d'alkyl-ammonium selon l'une des revendications 1 à 7 comme antistatique interne pour des plastiques à deux composants.
